# EUROPÄISCHE PATENTSCHRIFT

(11) **EP 0 656 105 B1**
(45) Veröffentlichungstag und Bekanntmachung des Hinweises auf die Patenterteilung: **09.10.1996**
(21) Anmeldenummer: 93915940.6
(22) Anmeldetag: 17.07.1993
(51) Int. Cl.: F16J 15/00, F16J 15/34

(54) **DRUCKDECKEL FÜR KREISELPUMPEN**
PRESSURE COVER FOR ROTARY PUMPS
COUVERCLE RESISTANT A LA PRESSION POUR POMPES ROTATIVES

(30) Priorität: 24.08.1992 DE 4228042
(43) Veröffentlichungstag der Anmeldung: 07.06.1995
(73) Patentinhaber: KSB Aktiengesellschaft, D-67227 Frankenthal (DE)
(72) Erfinder: RIEL, Axel, D-67227 Frankenthal (DE)
(86) Internationale Anmeldenummer: EP9301884
(87) Internationale Veröffentlichungsnummer: WO9404854

(56) Entgegenhaltungen:
- DE-A- 1 750 857
- DE-A- 3 906 426
- US-A- 4 900 039

## Beschreibung

Die Erfindung betrifft eine Kreiselpumpe gemäß dem Oberbegriff des Hauptanspruches.

Zur Abdichtung eines Pumpeninneren gegenüber der Atmosphäre sind die unterschiedlichsten Ausführungsformen von Dichtungen bekannt. Dies resultiert aus der Art des Fördermediums, seiner Gefährlichkeit oder seiner Empfindlichkeit, der Verschleißbeständigkeit einer Gleitringdichtung gegenüber dem Fördermedium bzw. dem Förderdruck sowie der Zugänglichkeit zur Gleitringdichtung selbst. Eine einfache Lösung ist durch die vom Anmelder vertriebene Pumpe ETACHROM N bekannt, bei der innerhalb des Pumpengehäuses eine Gleitringdichtung zwischen Laufrad und Gehäuse direkt angeordnet ist.

Bei schwierigen Betriebsbedingungen finden häufig doppelt wirkende Gleitringdichtungen oder auch Tandemdichtungen Anwendung. So zeigt die DE-C-1 269 436 eine Anordnung einer außenliegenden, doppelt wirkenden Gleitringdichtung in einem mehrteiligen Dichtungsgehäuse. Hierbei findet ein spezieller Träger Verwendung, der auf der Welle befestigt ist und die auf kleinerem Durchmesser angeordnete Gleitringdichtung abdeckend überragt. Auf dem Außendurchmesser des Trägers ist dann eine zweite Gleitringdichtung angeordnet, die sich im Dichtungsgehäuse abstützt. Die Gleitringe sind hierbei in etwa in der gleichen Radialebene angeordnet.

Durch die US-A 4 900 039 ist ein Gleitringdichtungsgehäuse bekannt, innerhalb dessen zwei Gleitringdichtungen auf verschiedenen Durchmessern angeordnet sind. Mit ihren Gleitflächen liegen sie gleichzeitig an einem einzigen rotierenden Wellenring an. Diese Sonderbauart mit einem rotierenden Wellenring und zwei stationären stillstehenden Gegenringen soll beim Ausfall der einen Dichtung einen weiteren Betrieb mit Hilfe der anderen Dichtung ermöglichen.

Bei der Lösung gemäß der US 2 831 712 ist zwischen der abzudichtenden Hochdruckseite und der Atmosphäre eine doppelte Gleitringdichtung angeordnet. In dem Raum zwischen den beiden Gleitringdichtungen soll mit Hilfe einer speziell konstruierten Ventilmechanik ein konstanter Differenzdruck aufrechterhalten werden. Als rotierende Gleitringe finden Scheibenelemente unterschiedlicher Durchmesser Verwendung, die mittels Hilfselementen auf der Welle befestigt sind.

Axial hintereinander angeordnete Gleitringdichtungen zeigen die DE-A-1 750 857 und die DE-A-3 507 819. Mit Hilfe von außen anbringbarer Dichtungsgehäuse sowie spezieller Einsätze wird hier die Montage der Dichtung ermöglicht. Die DE-A-3 507 819 mit ihrer aufwendigen Gestaltung der die Dichtung beinhaltenden Räume sieht eine wahlweise Verwendung von einer oder zwei Dichtungen vor. Die DE-C-3 906 426 lehrt die Verwendung eines Bauelementensatzes für unterschiedlichen Nennweitenbereiche von Doppelgleitringdichtungen. Dabei wird für den nächstfolgenden Nennweitenbereich ein Dichtungselement des vorhergehenden Nennweitenbereiches benutzt. Diese Maßnahme dient zur Minimierung der Anzahl der Verwendung findenden Gleitringdichtungen.

Der Erfindung liegt das Problem zugrunde, für Kreiselpumpen ein Gleitringdichtungsgehäuse zu entwickeln, welches bei einer Vielzahl von Pumpen Anwendung finden kann. Die Lösung dieses Problems erfolgt gemäß dem kennzeichnenden Teil des Hauptanspruches. Damit wird in vorteilhafter Weise der völlige Verzicht auf ein spezielles Gleitringdichtungsgehäuse erreicht, indem sich die Gleitringdichtung einfach an einen für jede Pumpe notwendigen Druckdeckel in axialer Richtung abstützt. Die Verwendung von mindestens zwei Widerlagern für die Gleitringdichtungsabstützung in axialer Richtung ermöglicht eine außerordentliche Variantenvielfalt durch die Verwendung des Druckdeckels bei Pumpenbaureihen. Durch den Einsatz von normierten Dichtungen kann ein Betreiber einer Pumpe in einfacher Weise auswählen, welcher Gleitringdichtungstyp in seinem Betrieb Verwendung finden soll. Aus Gründen einer geringen Lagerhaltung und Kostenreduzierung wird er gewöhnlich einem Gleitringdichtungstyp den Vorzug geben, der bereits bei seinen im Einsatz befindlichen Pumpen Anwendung findet.

Die Pumpe kann ohne Schwierigkeiten mit nur jeweils einem Gleitring, der auf dem großen oder kleinem Durchmesser angeordnet ist, betrieben werden. Findet der Druckdeckel bei Maschinen mit größerer Antriebsleistung Anwendung, dann ist im Bereich des Wellendurchtrittes genügend Raum vorhanden, um auch eine im Durchmesser größere Antriebswelle in das Gehäuse einzuführen. In einem derartigen Fall würde dann nur eine einzige, auf großem Durchmesser angeordnete Gleitringdichtung Verwendung finden, da dann der Platz für den Einsatz einer auf kleinerem Durchmesser angeordneten Gleitringdichtung nicht mehr gegeben ist.

Nach einer Ausgestaltung der Erfindung sind die auf kleinerem Durchmesser anbringbaren Gleitringdichtungen direkt auf der Antriebswelle dichtend angeordnet. Dies ermöglicht die Verwendung kleiner, preiswerter Gleitringdichtungen sowie den Verzicht auf sogenannte Wellenschutzhülsen.

Wiederum eine andere Ausgestaltung der Erfindung sieht vor, daß sich eine oder beide Gleitringdichtungen an der Nabe eines Laufrades der letzten Pumpenstufe abstützend anlegen. Dies kann direkt oder indirekt unter Zwischenschaltung eines Dichtungsringes erfolgen. Beispielsweise würde sich die auf kleinerem Durchmesser befindliche Gleitringdichtung am Nabenende eines Laufrades abstützen und die darüber angeordnete, auf größerem Durchmesser befindliche Gleitringdichtung, auf einem Absatz der Nabe des Laufrades abstützen. Der Druckdeckel kann sowohl an ein- oder mehrstufigen Pumpen Anwendung finden, wobei im ersteren Fall die letzte Pumpenstufe identisch mit der einzigen Pumpenstufe wäre.

In denjenigen Fällen, in denen der Verwendung einer doppelten Gleitringdichtung der Vorzug gegeben wird, sind im Druckdeckel im Bereich zwischen den Widerlagern Anschlüsse für eine Flüssigkeitsleitung vorgesehen. Diese Anschlüsse können jeweils im Bedarfsfall angebracht werden oder sie können permanent angebracht sein, wobei dann im Bedarfsfall lediglich Verschlußstopfen zu entfernen sind. Dadurch ist es möglich, eine kühlende oder spülende Flüssigkeitsvorlage in den Raum zwischen den beiden Gleitringdichtungen einzuspeisen. Gleichzeitig ist damit eine Kontrollmöglichkeit über die Dichtwirkung gegeben. Bleibt der Flüssigkeitsspiegel in einem mit einem Anschluß für eine Flüssigkeitsleitung verbundenen Behälter konstant, dann ist auch die Dichtwirkung der Gleitringdichtungen konstant. Verändert er sich dagegen, dann ist die Dichtwirkung der einen oder anderen Gleitringdichtung defekt. Der Verzicht auf ein komplettes Gleitringdichtungsgehäuse und die Anordnung in der erfindungsgemäßen Art erlaubt darüber hinaus eine ungewöhnlich schnelle und einfache Dichtungsmontage.

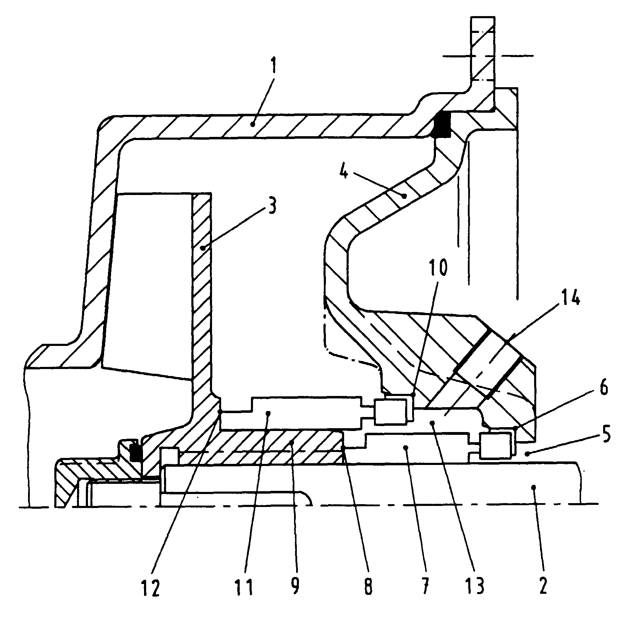

Ein Ausführungsbeispiel der Erfindung ist in der Zeichnung dargestellt und wird im folgenden näher beschrieben. In ein hier einstufig ausgebildetes Kreiselpumpengehäuse (1) ragt eine Antriebswelle (2) hinein, auf der ein Laufrad (3) drehmomentübertragend befestigt ist. Das Gehäuse (1) ist durch einen Druckdeckel (4) verschlossen, durch dessen Öffnung (5) die Welle (2) in das Gehäuse hineinragt. Direkt im Bereich der Öffnung (5) befindet sich ein Widerlager (6) für eine auf kleinstem Durchmesser anbringbare Gleitringdichtung (7), die sich an der Stirnseite (8) der Laufradnabe (9) abstützt. Ein weiteres Widerlager (10) für eine auf größerem Durchmesser angeordnete Gleitringdichtung (11) befindet sich in axialer Richtung zum Laufrad hin versetzt am Druckdeckel (4). Die dort befestigte Gleitringdichtung (11) stützt sich auf einem Absatz (12) des Laufrades (3) ab. Die Abdichtung erfolgt hier auf der Nabe (9) des Laufrades (3) und direkt auf der Welle (2). Das hier gewählte Beispiel zeigt, daß der Raum (13) zwischen den beiden Gleitringdichtungen (7, 11) durch zwei gegenüberliegende Anschlüsse (14) von außen zugänglich ist.

Der zweite Anschluß ist nicht dargestellt. Im Bedarfsfall können daran Flüssigkeitsleitungen angeschlossen werden oder diese Anschlüsse (14) erst angebracht werden.

Bei den gezeigten Gleitringdichtungen (7, 11) kann es sich um Gleitringdichtungen einer genormten Baureihe handeln, welche in ihrem Aufbau identisch, aber in den Abmessungen unterschiedlich sind. Je nach Bedarf, Wunsch oder Einsatzzweck können nur eine Gleitringdichtung oder zwei Gleitringdichtungen Verwendung finden. Der Druckdeckel kann als Guß- oder Blechformteil erstellt werden. Dessen Herstellungsart hat keinen Einfluß auf die Anordnung der Widerlager.

## Patentansprüche

1. Kreiselpumpe, dessen flüssigkeitsgefüllter Innenraum durch einen Druckdeckel (4) verschlossen ist, wobei der Druckdeckel (4) mit einer Öffnung (5) für die Durchführung einer Welle (2) versehen ist und auf der dem Pumpeninnern zugekehrten Seite des Druckdeckels (4) ein Widerlager (6) für eine als Gleitringdichtung (7) ausgebildete Wellenabdichtung angebracht ist, **dadurch gekennzeichnet**, daß der Druckdeckel (4) mit mindestens zwei Widerlagern (6, 10) versehen ist, daß die Widerlager (6, 10) auf unterschiedlichen Durchmessern und in axialer Richtung zueinander versetzt angeordnet sind, und daß der radiale Abstand der beiden Widerlager (6, 10) mindestens so groß bemessen ist, daß zwei Gleitringdichtungen (7, 11) unterschiedlicher Durchmesser anbringbar sind.

2. Kreiselpumpe nach Anspruch 1, dadurch gekennzeichnet, daß die auf kleinerem Durchmesser anbringbare Gleitringdichtung (7) auf der Antriebswelle (2) direkt dichtend angeordnet ist.

3. Kreiselpumpe nach den Ansprüchen 1 oder 2, dadurch gekennzeichnet, daß eine oder beide Gleitringdichtungen (7, 11) an der Nabe (9) des Laufrades der letzten Pumpenstufe abstützend anliegen.

4. Kreiselpumpe nach den Ansprüchen 1, 2 oder 3, dadurch gekennzeichnet, daß im Bereich zwischen den Widerlagern der Druckdeckel mit Anschlüssen (14) für eine Flüssigkeitsleitung versehen ist.

## Claims

1. Centrifugal pump whose liquid-filled interior is sealed by a pressure cover (4), the pressure cover (4) being provided with an opening (5) for the penetration of a shaft (2), and an abutment (6) for a shaft seal constructed as a bearing ring seal (7) being fitted on the side of the pressure cover (4) facing the pump interior, characterized in that the pressure cover (4) is provided with at least two abutments (6, 10), in that the abutments (6, 10) are arranged on different diameters and offset relative to one another in the axial direction, and in that the radial spacing of the two abutments (6, 10) is dimensioned to be at least so large that two bearing ring seals (7, 11) of different diameter can be fitted.

2. Centrifugal pump according to Claim 1, characterized in that the bearing ring seal (7) which can be fitted on a smaller diameter is arranged in a directly sealing fashion on the drive shaft (2).

3. Centrifugal pump according to Claim 1 or 2, characterized in that one or both bearing ring seals (7, 11) bear in a supportive fashion against the hub (9) of the impeller of the last pump stage.

4. Centrifugal pump according to Claim 1, 2 or 3, characterized in that the pressure cover is provided in the region between the abutments with connections (14) for a liquid line.

## Revendications

1. Pompe rotative, dont le volume intérieur rempli de liquide est fermé par un couvercle résistant à la pression (4), dans laquelle le couvercle résistant à la pression (4) est pourvu d'une ouverture (5) pour la traversée d'un arbre (2) et une contre-butée (6) est agencée sur le côté du couvercle résistant à la pression (4) tourné vers l'intérieur de la pompe, pour une garniture d'étanchéité de l'arbre constituée par une garniture d'étanchéité à anneau glissant (7), caractérisée en ce que le couvercle résistant à la pression (4) est pourvu d'au moins deux contre-butées (6, 10), en ce que les contre-butées (6, 10) sont disposées sur des diamètres différents et sont décalées l'une par rapport à l'autre dans la direction axiale, et en ce que la distance radiale entre les deux contre-butées (6, 10) est suffisamment grande pour que deux garnitures d'étanchéité à anneau glissant (7, 11) de diamètres différents puissent être placées.

2. Pompe rotative suivant la revendication 1, caractérisée en ce que la garniture d'étanchéité à anneau glissant (7) à placer sur le plus petit diamètre est disposée en étanchéité directe sur l'arbre de commande (2).

3. Pompe rotative suivant les revendications 1 ou 2, caractérisée en ce qu'une ou les deux garniture(s) d'étanchéité à anneau glissant (7, 11) s'appuie(nt) sur le moyeu (9) de la roue mobile du dernier étage de pompe.

4. Pompe rotative suivant les revendications 1, 2 ou 3, caractérisée en ce que le couvercle résistant à la pression est, dans la région située entre les contre-butées, pourvu de raccords (14) pour une conduite de liquide.
